# EUROPÄISCHE PATENTSCHRIFT

(11) **EP 0 402 609 B1**
(45) Veröffentlichungstag und Bekanntmachung des Hinweises auf die Patenterteilung: **03.08.1994**
(21) Anmeldenummer: 90108419.4
(22) Anmeldetag: 04.05.1990
(51) Int. Cl.: H01H 13/02, H02B 1/04

(54) **Schaltergehäuse für elektrischen Schalter**
Switchcasing for electrical switches
Boîtier pour interrupteur électrique

(30) Priorität: 12.06.1989 CH 2186/89
(43) Veröffentlichungstag der Anmeldung: 19.12.1990
(73) Patentinhaber: Elektro-Apparatebau Olten AG, 4600 Olten (CH)
(72) Erfinder: Portmann, Hansjörg, CH-4563 Gerlafingen (CH); Torma, Mikael, CH-4600 Olten (CH)
(74) Vertreter: Fillinger, Peter, Dr.

(56) Entgegenhaltungen:
- EP-A- 0 160 206
- EP-A- 0 184 186
- WO-A-85/02938

## Beschreibung

Die vorliegende Erfindung bezieht sich auf ein Schaltergehäuse für einen elektrischen Schalter gemäss dem Oberbegriff des Anspruchs 1.

Schaltergehäuse der genannten Art sind aus der EP-A-184 186 und der GB-A-2 202 678 bekannt. In eine Schalttafel, Schaltwarte oder dgl. eingesetzte Befehls- und Meldegeräte der genannten Art werden auf der Schalttafelfrontseite bedient, wo sie gleichmässig über die Frontplatte vorstehen. Sind die Befehls- und Meldegeräte rückseitig an Leiterplatten angeschlossen, müssen diese entsprechend der Länge der Geräte von der Frontplatte genau distanziert werden. Dies erfolgt mittels Distanzhaltebolzen, was einen vergleichsweise grossen Montageaufwand erfordert und bei ungenauem Arbeiten - wenn die Distanzhalter geringfügig länger als die Schaltergehäuse sind - zudem den Nachteil hat, dass sich die Schaltwege von Tastern und Tastschaltern entsprechend dieser Ungenauigkeit verändern können.

Die vorliegende Erfindung stellt sich die Aufgabe, Mittel anzugeben, um diese Nachteile zu beseitigen.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Es zeigen:
- Fig. 1: eine perspektivische Ansicht eines Schalters, wobei ein Sektor des Schaltergehäuses weggebrochen ist,
- Fig. 2: einen Schnitt längs der Linie II-II in Fig. 1 und
- Fig. 3: eine perspektivische Explosionsdarstellung des Schaltergehäuses.

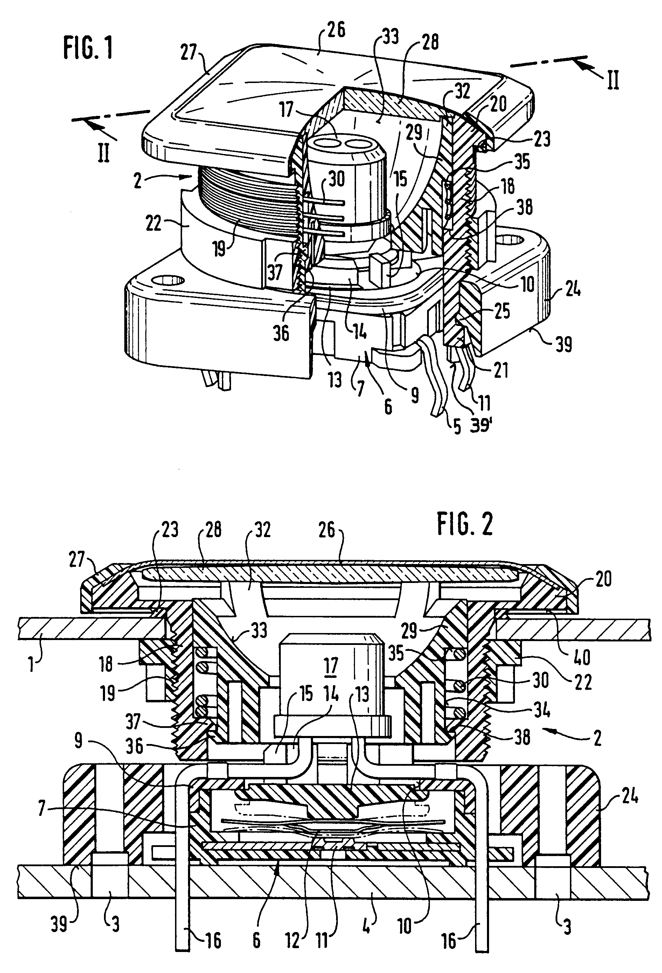

Die Fig. 2 zeigt im Schnitt einen fest in eine Frontplatte 1 eingesetzten Schalter gemäss Fig. 1. Am Schaltergehäuse 2 ist rückseitig eine Leiterplatte 4 festgeschraubt (3). Der Schalter dient dem Unterbrechen oder Verbinden der Kontakte 5, 11, welche auf der Leiterplatte 4 mit den entsprechenden Leiterbahnen verbunden sind.

Das Schaltergehäuse 2 umschliesst ein die Schaltkontakte enthaltendes Schaltelement 6. Dieses weist im wesentlichen ein in der Draufsicht quadratisches Gehäuse 7 auf, das nach unten durch einen Boden 8 abgeschlossen ist. Auf dem Gehäuse 7 ist ein Rahmen 9 befestigt, der nach oben eine Öffnung 10 frei lässt. Im Boden 8 befinden sich die Schaltkontakte 5 und 11, die mit zwei Leiterbahnen der Leiterplatte 4 verbunden sind. Ebenfalls mit dem Boden 8 fest verbunden ist eine Federmembrane 12, die zwischen einer Ruhelage (mit ausgezogenen Strichen gezeichnet) und einer Arbeitslage (strichpunktiert gezeichnet) verformbar ist, in welch letzterer sie den Schaltkontakt 11 berührt und diesen leitend mit einer oder beiden der Leiterbahnen verbindet oder unterbricht. Die Verformung der Federmembrane 12 erfolgt mittels einer aufliegenden tellerförmigen Platte 13, die durch die elastische Rückstellkraft der Federmembrane 12 in Anlage mit dem Rahmen 9 gehalten ist. Nach oben wird die Platte 13 von einem ringrippenartigen Vorsprung 14 überragt, der mit radialen Durchbrechungen 15 für das Hindurchführen der Leiter 16 eines Beleuchtungskörpers 17 versehen ist. Der Beleuchtungskörper 17 wird mit seinen Leitern 16 durch die Öffnungen im Boden 8 gestossen und mit den Leitern auf der Leiterplatte 4 verbunden.

Das beschriebene Schaltelement ist eine selbständige Baueinheit, die bei der Bestückung von Leiterplatten 4 an den gewünschten Schaltstellen aufgesteckt und verbunden wird. Durch Druck auf den Vorsprung 14 wird die Platte 13 nach unten bewegt und drückt mit einer zentralen, nach unten gerichteten Nase den Mittelsteg der Federmembrane 12 nach unten und über einen Totpunkt. Nach dem Überschreiten des Totpunktes springt der Mittelsteg gegen den Schaltkontakt 12. Wird der Vorsprung 14 entlastet, entspannt sich die Federmembrane 12 und kehrt in die Ruhelage zurück. Dabei verschiebt sie die Platte 13 wieder nach oben und hält sie in Anlage mit dem Rahmen 9. Auf diese Weise können bestückte Printplatten vor dem Anbringen einer Frontplatte 1 auf ihre Funktionsfähigkeit geprüft werden.

Das den Betätigungsmechanismus für das Schaltelement 6 enthaltende Schaltergehäuse 2 weist im wesentlichen einen zylindrischen Mantel 18 mit einem Aussengewinde 19, einen frontseitigen Spannrahmen 20 und rückseitige Rastfederbeine 21 auf. Die Spannrahmenrückseite 40 bildet eine Anschlagfläche gegen die Montagewand 1. Mittels einer auf das Aussengewinde 19 aufschraubbaren Ringmutter 22 ist das Schaltergehäuse 2 gegebenenfalls unter Zwischenlage eines Dichtringes 23 an der Frontplatte 1 befestigbar. Zum Schaltergehäuse 2 gehört weiter ein Flansch 24, der nach dem Befestigen des Mantels 18 an der Frontplatte 1 über die Rastfederbeine 21 geschoben wird, bis diese mit entsprechenden Rastnocken 25 verrasten. Über den Spannrahmen 20 ist eine elastisch verformbare Folie 26 gespannt und entlang ihrer Ränder durch Schweissen oder Kleben daran befestigt.

Nach dem Anbringen der Folie werden deren Ränder durch einen Blendrahmen 27 abgedeckt, der auf den Spannrahmen 20 aufgesteckt ist. Der Blendrahmen 27 ist auswechselbar und kann entsprechend den Abnehmerwünschen in Form und Farbe verschieden gestaltet sein.

Der bewegliche Betätigungsmechanismus für das Schaltelement 6 besteht aus der elastischen Folie 26 sowie aus einer Diffusorplatte 28 und einem im Mantel 18 achsial verschiebbaren Reflektor 29, der von einer Rückstellfeder 30 beaufschlagt ist.

Die lichtdurchlässige Diffursorplatte 28 kann in einer gewünschten Farbe getönt sein. An ihren vier Seiten ist sie je mit einer Ausnehmung 31 versehen, mit denen sie auf vier vom Reflektor 29 nach oben ragende Stifte 32 aufsteckbar ist. Es ist indessen auch möglich, die Diffusorplatte 28 lose auf den Reflektor 29 aufzulegen.

Der Reflektor 29 ist innenseitig mit einer nach oben orientierten Reflektionsfläche 33 versehen, die den Beleuchtungskörper 17 umgibt. Aussen ist er durch eine zylindrische Oberfläche 34 begrenzt, die im Bereich des frontseitigen Endes eine Ringschulter 35 bildet und am anderen Ende mit zwei gegenüberliegenden Rastnasen 36 versehen ist. Diese wirken mit entsprechenden Vorsprüngen 37 an der Innenseite des Mantels 18 zusammen und halten den in den Mantel 18 gesteckten Reflektor 29 unverlierbar im Schaltergehäuse 2 fest. Zwischen einer Ringschulter 38 auf der Mantelinnenseite und der Ringschulter 35 des Reflektors 29 ist die auf Druck vorgespannte Rückstellfeder 30 angeordnet. Diese hat die Neigung, den Reflektor 29 nach oben zu drücken und die Rastnasen 36 in Anschlag mit den Vorsprüngen 37 zu halten. In dieser Stellung drückt der Reflektor 29 die Diffusorplatte 28 gegen die Folie 26 und hält sie, sofern sie nur lose auf den Reflektor 29 aufgelegt ist, unverrückbar fest.

Ist der Mantel 18 mit seinen beweglichen Teilen 26, 28, 29 in einer Montageplatte 1 durch Festziehen der Ringmutter 22 befestigt, wird der Flansch 24 auf den Mantel 18 aufgesteckt, und zwar so, dass die Rastfederbeine 21 mit den Rastnocken 25 verrasten. Beim derart montierten Schaltergehäuse 2 bildet die Flanschrückseite eine ebene Anschlag- bzw. Montagefläche 39 für die Leiterplatte 4. Der Abstand der Montagefläche 39 zur Montagewand 1 ist bei allen Schaltern gleich und gewährleistet eine vollständig parallele Ausrichtung von Montagewand 1 und Leiterplatte 4, wenn sie mehrere Schalter enthalten. In die Montagefläche 39 öffnet sich die vom Schaltergehäuse gebildete Aufnahmekammer für das Schaltelement 6, die im wesentlichen seitlich durch den Flansch 24 begrenzt ist. Beim Zusammenbau einer Schalttafel wird die bestückte Leiterplatte 4 gegen die Montagefläche 39 gelegt, so dass die Schaltelemente vollständig in das zugehörige Schaltergehäuse 2 eintauchen. Danach wird die Leiterplatte 4 mit selbstschneidenden Schrauben am Flansch 24 festgeschraubt.

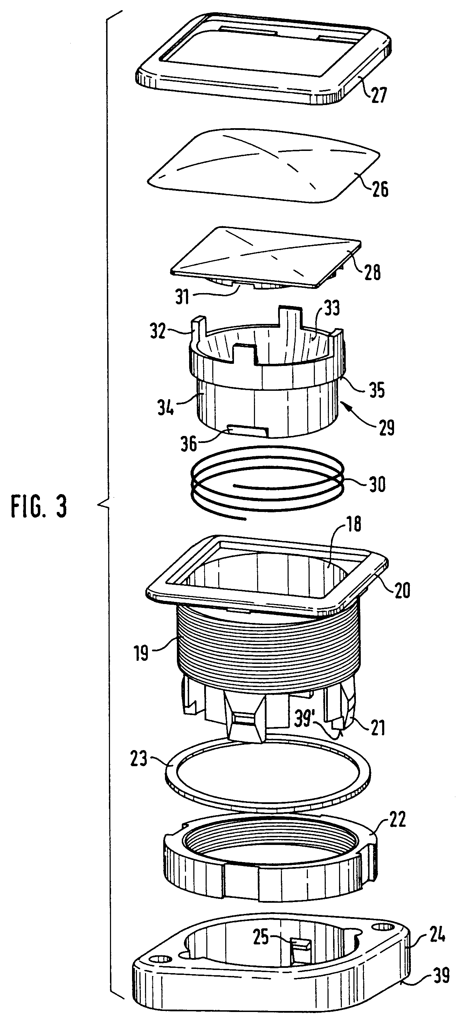

Es ist auch möglich, die Länge der Rastfederbeine 21 so zu wählen, dass sie nach dem Verrasten des Flansches 24 mit dem Mantel 18 geringfügig und gleichmässig über die als Montagefläche 39 bezeichnete Flanschrückseite vorstehen. In diesem Fall bilden die Rastfederbeine 21 eine Montagefläche 39′ (Fig. 3) an der die Printplatte 4 zur Anlage kommt, wenn sie mittels der Schrauben 3 am Flansch 24 festgeschraubt ist.

Ist die Leiterplatte 4 am Flansch 24 befestigt, bleibt die Distanz zwischen der Montagewand 1 und der Printplatte 4 immer gleich. Drückt man nun von oben auf die Folie 26, schieben sich der Reflektor 29 und die Platte 13 nach unten und verformen die Federmembrane 12 bis sie umspringt und die Kontakte 5, 11 schliesst.

Die Verwendung des Schaltergehäuses 2 als Distanzhaltelement zwischen der Montagewand 1 und der Leiterplatte 4 und die damit erreichte Parallelstellung dieser Platten bewirkt, dass bei allen Schaltern in einer Montageplatte die Vorsprünge 14 mit dem gleichen Abstand zum zugehörigen Reflektor 29 in Anlage gebracht werden können und dass demzufolge bei allen Schaltern der Schaltweg gleich gross ist.

## Patentansprüche

1. Schaltergehäuse für einen elektrischen Schalter, an dessen frontseitigem Ende eine gegenüber einer Frontplatte (1) wirksame Anschlagfläche (40) vorhanden ist, die mit einem Befestigungselement (22) mit der Frontplatte in Anlage bringbar ist, dadurch gekennzeichnet, dass das Schaltergehäuse (2) auf seiner Rückseite eine zur Anschlagfläche (40) parallele Montagefläche (39, 39') und durch eine flanschartige Gestaltung Befestigungsstellen (3) für Befestigungsmittel bildet, derart, dass das Schaltergehäuse (2) mit der Montagefläche (39, 39') an einer Leiterplatte (4) befestigbar ist.

2. Schaltergehäuse nach Anspruch 1, dadurch gekennzeichnet, dass das Schaltergehäuse (2) in Richtung seiner Längsachse in einen vorderen, die Anschlagfläche (40) aufweisenden und in einen hinteren Teil (18 bzw. 24) unterteilt ist, welche Teile miteinander verbindbar sind.

3. Schaltergehäuse nach Anspruch 2, dadurch gekennzeichnet, dass die beiden Teile (18 bzw. 24) form- und/oder kraftschlüsig miteinander verbindbar sind.

4. Schaltergehäuse nach einem der Ansprüche 2 oder 3, dadurch gekennzeichnet, dass der hintere Teil (24) flanschartig gestaltet ist.

5. Schaltergehäuse nach Anspruch 4, dadurch gekennzeichnet, dass der hintere Teil (24) die Montagefläche (39) bildet.

6. Schaltergehäuse nach einem der Ansprüche 2 bis 4, dadurch gekennzeichnet, dass der vordere Teil (18) den hinteren Teil (24) mit einzelnen Abschnitten (21) durchdringt und hinter der Rückseite des hinteren Teils (24) die Montagefläche (39') bildet.

7. Schaltergehäuse nach Anspruch 6, dadurch gekennzeichnet, dass die Abschnitte (21) Rastfederbeine zur form- und/oder kraftschlüssigen Verbindung der beiden Teile (18, 24) sind.

8. Schaltergehäuse nach einem der Ansprüche 2 bis 7, dadurch gekennzeichnet, dass der vordere Teil (18) durch einen frontseitigen Spannrahmen (20) die Anschlagfläche (40) bildet und vom Spannrahmen (2) weg nach hinten zylindrisch sowie mit einem Aussengewinde (19) gestaltet ist, auf das eine Überwurfmutter (22) als Befestigungselement aufschraubbar ist.

9. Schaltergehäuse nach einem der Ansprüche 2 bis 8, dadurch gekennzeichnet, dass im hinteren Teil (24) eine Aufnahmekammer für ein Schaltelement (6) vorhanden ist, welche sich in die Montagefläche (39, 39') öffnet.

## Claims

1. Switch enclosure for an electric switch, on the front end of which there is a stop face (40) effective with respect to a front plate (1) and adapted to be brought into contact with the front plate by a fastening element (22),
characterised in that on the back the switch enclosure (2) forms an assembly face (39, 39') parallel to the stop face (40) and due to its flange-like shape forms fixing points (3) for fasteners, such that the switch enclosure (2) can be fastened by the assembly face (39, 39') to a printed-circuit panel (4).

2. Switch enclosure according to claim 1, characterised in that in the direction of its longitudinal axis the switch enclosure (2) is divided into a front part (18) incorporating the stop face (40) and into a rear part (24), said parts being adapted to be joined together.

3. Switch enclosure according to claim 2, characterised in that the two parts (18 and 24, respectively) are adapted to be joined together in a positive and/or frictional fit.

4. Switch enclosure according to either of claims 2 or 3, characterised in that the rear part (24) is shaped like a flange.

5. Switch enclosure according to claim 4, characterised in that the rear part (24) forms the assembly face (39).

6. Switch enclosure according to any of claims 2 to 4, characterised in that individual sections (21) of the front part (18) pass through the rear part (24) and to the back of the rear part (24) form the assembly face (39').

7. Switch enclosure according to claim 6, characterised in that the sections (21) are locking telescopic legs for positive and/or frictional connection of the two parts (18, 24).

8. Switch enclosure according to any of claims 2 to 7, characterised in that the front part (18) forms the stop face (40) by way of a front clamping frame (20) and rearwards away from the clamping frame (20) is cylindrically shaped and externally threaded (19) to allow a sleeve nut (22) to be screwed on as a fastening element.

9. Switch enclosure according to any of claims 2 to 8, characterised in that in the rear part (24) there is a locating compartment for a switch element (6), which opens into the assembly face (39, 39').

## Revendications

1. Boîtier pour interrupteur électrique dont l'extrémité frontale présente une surface de fixation (40) active par rapport à une plaque frontale (1), et qui se met en appui contre la plaque frontale par un élément de fixation (22), caractérisé en ce que sur sa face arrière, il forme une surface de montage (39, 39') parallèle à la surface de fixation (40) et par une structure en forme de bride , il constitue des points de fixation (3) pour des moyens de fixation de façon que le boîtier (2) puisse se fixer avec la surface de montage (39, 39') sur une plaque (4) de circuit imprimé.

2. Boîtier pour interrupteur selon la revendication 1, caractérisé en ce que le boîtier (2) est subdivisé dans la direction de son axe longitudinal en une partie avant munie de la surface de fixation (40) et une partie arrière (18, 24) susceptible de relier des pièces entre elles.

3. Boîtier pour interrupteur selon la revendication 2, caractérisé en ce que les parties (18, 24) sont reliées par une liaison par la forme et/ou par la force.

4. Boîtier pour interrupteur selon l'une quelconque des revendications 2 ou 3, caractérisé en ce que la partie arrière (24) est en forme de bride.

5. Boîtier pour interrupteur selon la revendication 4, caractérisé en ce que la partie arrière (24) forme la surface de montage (39).

6. Boîtier pour interrupteur selon l'une des revendications 2 à 4, caractérisé en ce que la partie avant (18) traverse la partie arrière (24) avec des segments séparés (21) et forme la surface de montage (39') derrière la face arrière de la pièce arrière (24).

7. Boîtier pour interrupteur selon la revendication 6, caractérisé en ce que les segments (21) des jambes élastiques d'accrochage servent à la liaison par la forme et/ou par la force des deux pièces (18, 24).

8. Boîtier pour interrupteur selon l'une des revendications 2 à 7, caractérisé en ce que la partie avant (18) forme la surface de fixation (40) par un cadre de serrage (20), frontal, et comporte en partant du cadre de serrage (20) vers l'arrière, une forme cylindrique et un filetage extérieur (19) sur lequel se visse un écrou (22) constituant un élément de fixation.

9. Boîtier pour interrupteur selon l'une des revendications 2 à 8, caractérisé en ce que dans la partie arrière (24), se trouve une chambre de réception pour un élément d'interrupteur (6), chambre qui débouche dans la surface de montage (39, 39').
